# EUROPEAN PATENT APPLICATION

(11) **EP 4 718 817 A1**
(43) Date of publication of application: **01.04.2026**
(21) Application number: 24398021.6
(22) Date of filing: 27.09.2024
(51) Int. Cl.: H04L 65/1069, H04W 60/00, H04L 65/1073, H04W 76/10

(54) **A METHOD OF REGISTERING A MOBILE DEVICE, A METHOD OF INITIATING A VOICE CALL, A NETWORK ENTITY AND A COMPUTER PROGRAM**

(71) Applicant: Vodafone Group Services Limited, Newbury, Berkshire RG14 2FN (GB)
(72) Inventor: Dominguez, Rafael, London, W2 6BY (GB); Lima, Bruno, London, W2 6BY (GB); Gorokhova, Natalia, London, W2 6BY (GB); Ramazanirend, Elmira, London, W2 6BY (GB)
(74) Representative: Boult Wade Tennant LLP

(57) **Abstract**

A method of registering a mobile device is provided. The method comprises receiving a registration message from a mobile device, wherein the mobile device corresponds with a unique mobile identity, wherein the mobile identity is one of a plurality of mobile identities belonging to a set, wherein the plurality of mobile identities belonging to the set share a common primary identity, wherein the registration message comprises an indication that the mobile device is unable to accept voice calls. The method further comprises storing, in a subscriber data store, a record corresponding to the unique mobile identity of the mobile device and an indication that the mobile device is unable to accept voice calls.

## Description

### Field of the invention

The present invention relates to registration of mobile devices. Specifically, the invention relates to registration of mobile devices in a multi-device scenario. The invention further relates to initiation of voice calls in a multi-device scenario, where at least one of the registered devices is a data-only device.

### Glossary

SIM - Subscriber Identity Module
eSIM - Embedded SIM
IRS - Implicit Registration Set
HSS - Home Subscriber Server
IP - Internet Protocol
CDR - Charging Data Record
IMEI - International Mobile Equipment Identity
HLR - Home Location Register
PLMN - Public Land Mobile Network
HPLMN - Home PLMN
MME - Mobility Management Entity
CS - Circuit Switched
CSFB - Circuit Switched Fallback
SMS - Short Message Service
MSC - Mobile Switching Center server
IOT - Internet of Things
VPLMN - Visited PLMN
PUI - Public User Identity
EUTRAN - Evolved-UMTS Terrestrial Radio Access Network
SIP - Session Initiation Protocol
MGW - Media Gateway
IAM - Initial Address Message
IMS - IP Multimedia Subsystem
SGs - Signalling Gateways
SGsAP - SGs Application Part
VLR - Visitor Location Register
RLC - Radio Link Control
IMSI - International Mobile Subscriber Identity
MSISDN - Mobile Station International Subscriber Directory Number
IMPI - IP Multimedia Private Identity
IMPU - IP Multimedia Public Identity
RAT - Radio Access Technology
TS - Technical Specifications
MSS - Mobile Soft Switch
PS - Packet Switched
UDR - User Depository Request
EPS - Evolved Packet System
EMM - EPS Mobility Management
UE - User Equipment
TE - Terminal Equipment
MS - Mobile Station
MT - Mobile Terminal
UT - User Terminal
SS - Subscriber Station
PDA - Personal Digital Assistant
CDMA - Code Division Multiple Access
FDMA- Frequency Division Multiple Access
TDMA - Time Division Multiple Access
OFDMA - Orthogonal Frequency Division Multiple Access
SC-FDMA - Single Carrier Frequency Division Multiple Access
MC-FDMA - Multicarrier Frequency Division Multiple Access
UTRA - Universal Terrestrial Radio Access
GSM - Global System for Mobile Communications
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
CRS - Cell-specific Reference Signal
CSI-RS - Channel State Information Reference Signal
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EEPROM - Electrically Erasable Programmable Read-Only Memory
EPROM - Erasable Programmable Read-Only Memory

### Background

Network operators offer a service that involves permitting a subscriber to register multiple different SIM (or eSIM) devices, but to always use the same primary identity (the same telephonic number). Therefore, any outgoing calls from any of the multiple SIMs will always be shown at the called party end with the same telephonic identity (also referred to as a "primary identity"). For incoming calls, any call aiming to reach the common primary identity will cause all registered devices to ring. The call may be picked up on any of the registered SIMs, which are all associated with an IRS profile of the subscriber.

A Mobile Network Operator can provision extra devices (secondary devices associated with the primary device) that will be part of the subscriber's main profile (also referred to as a "primary identity"), so that incoming calls cause all the devices to ring. Each of the secondary devices registers with the core network to authenticate, get the credentials and service.

Each mobile device associated with the subscriber may therefore belong to a set. The set may be an implicit registration set, IRS. The IRS may be defined in the Home Subscriber Server, HSS. The set may include different identifiers for the mobile devices belonging to the set.

The secondary devices may include one or more smart phones, smart watches, tablet computers, and the like. When an incoming call is received, the call may be forked to every destination device in the set.

Whether or not a call can be answered by the destination device is dependent on a number of factors. For example, the device status may prevent calls from being answered on one or more devices (e.g. if one or more devices are switched off). Such a scenario is handled in the network by either deregistering these devices or by determining that they are temporarily unavailable.

On the other hand, the behaviour is different where a device is available but is not capable of receiving voice calls. For example, some tablet computers are only configured for data voice calls (voice over IP) and are not capable of receiving circuit-switched voice calls. Likewise, some smart watches are capable of receiving voice calls but others are not. Existing standards stipulate that the network sends a BUSY response (based on type of registration of the device) when a voice call is initiated to a device that is not capable of receiving voice calls. As a result of this response, the incoming call is cancelled. This is the correct behaviour for a single device scenario. However, in a multi-device scenario, this response causes the incoming call to be cancelled everywhere, on all the registered devices. The user therefore does not have an opportunity to answer the call on a device that is capable of receiving voice calls, whenever a device that is not capable of receiving voice calls is registered.

This issue is currently circumvented by a number of different ad hoc solutions, which are described below.

In a first existing solution, the network triggers an action in response to the first use of a Charging Data Record, CDR. This action, which is performed during postprocessing of the CDRs determines the secondary IMEI of the device when it registers. If the number corresponds to a multi-device subscriber, and if the secondary IMEI device is in a pre-provisioned list that indicates that the device is a data-only device (i.e. incapable of receiving a voice call), any incoming calls to the device are barred (e.g., by removing the TS11 voice teleservice from the HLR for the device or applying a barring). As a result of this, any incoming call to the device is rejected with a different code that does not cause the call to drop.

In order to implement this solution, the pre-provisioned list of data-only devices needs to be maintained to reflect the capabilities of every possible device. It is unrealistic to expect the network provide to accurately maintain a list of the capabilities of every possible device. Moreover, the solution may not work properly if the device is mostly connected via WiFi, rather than via a mobile data connection.

In a second existing solution, a device may register as a "data-only model" (which would normally cause the call to be rejected with a BUSY code and therefore be rejected everywhere) but additional logic is provided in the network to prevent a BUSY code from being sent in response. The solution is different depending on the realm, as outlined below.

### HPLMN

In 4G scenario, the MME can control whether or not to send the paging request based on a parameter, but that is again, a provisioning option, that needs to be configured when the profile is created or any other horizontal process.

However, this solution is not reliable and may fail for devices such as IOT devices (e.g. cameras, drones, routers), which behave differently than the data-only devices before (such as computer tablets). The result is that the MME solution does not function correctly. The second solution therefore also proposes a workaround to bar incoming voice calls (at HLR) for the SIM in such a device. However, this needs to be manually configured on a device-by-device basis.

For a 2G scenario the device may be configured in advance to ignore voice calls and not send back a busy. However, this will only work for devices that have been specifically configured this way. This will not work in other devices that have not been specifically configured this way.

### VPLMN

A configurable parameter controls whether a busy response is handled as user reject or as busy caused by "data only devices". The busy response for data-only devices is automated. Therefore, voice calls initiated to these devices will generally result in a busy response within a very short time window. If a user manually rejects the call, it will take some time. Therefore, in the second existing solution, if the busy response is received within a specified time window, it is treated as busy received from a data-only device. In this case, the service logic will NOT terminate the ringing of the other devices in the IRS. If the busy is received after the time window expired, it will be handled as normal (i.e., as a busy resulting from a user reject).

This should result in voice calls to that device being rejected by the network (but continuing to ring on other devices).

However, the system of the second existing solution is technically complex and is based on timers. Therefore, this is not an ideal solution. The system of the second existing solution could mis-detect a call reject pressed by a user (if the user rejects the call quickly) as an automatic call reject by the network. In this case, the call would continue to ring on other devices, when it should have been sent to voicemail.

Each of the prior art solutions described above has drawbacks. These solutions require manual provisioning (pre-existing or modifying the current provision) and/or they are based on ad-hoc network timers or behaviour. The first existing solution requires knowledge of the voice capabilities of every device the moment they are shipped, which is not practically achievable. The second pre-existing solution is based on timers and therefore is not very reliable. In some cases, the automatic rejection for data-only devices may take longer than expected timer may not trigger the mechanism, causing the call to reject everywhere. In other cases, the user may reject the call quickly and trigger the timer, causing the call to continue to ring on other devices, even though the user has rejected it (as described above).

### Summary

A method of registering a mobile device is provided. The method comprises receiving a registration message from a mobile device, wherein the mobile device corresponds with a unique mobile identity, wherein the mobile identity is one of a plurality of mobile identities belonging to a set, wherein the plurality of mobile identities belonging to the set share a common primary identity, wherein the registration message comprises an indication that the mobile device is unable to accept voice calls. The method further comprises storing, in a subscriber data store, a record corresponding to the unique mobile identity of the mobile device and an indication that the mobile device is unable to accept voice calls.

The subscriber data store may be used for session-related data. The subscriber data store may be a persistent database or a non-persistent storage.

The subscriber data store may be a Home Subscriber Server, HSS.

The mobile device may be a 3GPP device and may be referred to as a User Equipment, UE.

The voice call may be a circuit-switched voice call.

The unique mobile identity may also be referred to as a "public user identity", PUI.

Each mobile device may have a corresponding Service Profile. A Service Profile may apply to one or more devices in the set (in other words, multiple devices may share a Service Profile). The set may therefore include one or more Service Profiles.

The registration message may be generated as part of an attach sequence (e.g., an LTE or NR attach sequence).

The indication in the registration message that the mobile device is unable to accept voice calls may comprise one or more of:
a usage setting parameter (e.g., UEUsageSetting = 1); and
a voice domain parameter (e.g., VoiceDomainPreferenceForEUTRAN = 2).

The indication that the mobile device is unable to accept voice calls may be an indication that the mobile device is a data-only mobile device (i.e. unable to participate in circuit-switched sessions; only able to participate in packet-switched sessions))

A method of initiating a voice call is also provided. The method comprises receiving a message during initiation of a voice call to a destination mobile device. The destination mobile device corresponds with a unique mobile identity. The mobile identity is one of a plurality of mobile identities belonging to a set. The plurality of mobile identities belonging to the set share a common primary identity. The method further comprises retrieving, from a subscriber data store, a record corresponding to the unique mobile identity of the mobile device. The record further comprises an indication that the mobile device is unable to accept voice calls. The method further comprises responding to the message during initiation of a voice call by indicating that the destination mobile device is unreachable.

Some prior art methods reject the request by indicating that the device is busy. Doing so may cause the call to be cancelled so that all of the user's devices stop ringing in a multi-device scenario. In contrast, the proposed method responds to the message during initiation of a voice call by indicating that the destination mobile device is unreachable, rather than busy.

Indicating that the destination mobile device is unreachable may comprise sending a SIP 480 UNAVAILABLE message in some examples. The ultimate goal is for the SIP session to be answered to indicate that a SIP device is unreachable (the text of the reject message is not critical, the important part is to be able to differentiate it from a user busy, which is usually a SIP 486 response). The SIP response may be the result of the MGW translating the paging attempt into SIP

In both the present invention and the prior art, the SIP request fails. However, the cause is different in the present invention. In both cases, the SIP message is a 4xx error. The prior art fails with a 486 BUSY. In contrast, the present invention fails with a different error code. In some examples, the error is a 480 but other codes and messages may also be suitable.

A call may be initiated via a SIP invite and translated to a circuit-switched domain.

The message initiating the voice call to the destination mobile device may be received at one network entity in the network. In response, the network entity may initiate a process that causes other messages, which trigger the methods described above.

In some examples, a SIP message is received by a network entity and this is translated to an Initial Address Message, IAM. The IAM causes another network entity to retrieve the record from the subscriber data store and respond accordingly, indicating that the device is unavailable (rather than busy). The SIP message is a message initiating a voice call. The IAM is triggered by the SIP message and may be considered as a message during initiation of a voice call. Likewise, the IAM may cause a paging request. The paging request may also be considered as a message during initiation of a voice call.

In other words, in some examples, the message may be a message initiating a voice call (e.g., a SIP INVITE). In other examples, the message may be a message triggered in response to the call being initiated (e.g., IAM or paging message), rather than being a message actually initiating the call itself.

The message during initiation of a voice call may be a SIP invite, Initial Address Message, IAM, and/or Paging request.

The message during initiation of a voice call may be received from an IP Multimedia Subsystem, IMS.

The indication that the destination mobile device is unreachable may be an indication that the destination SIP device is temporarily unreachable.

The indication that the destination mobile device is unreachable may comprise an SGsAP-UE-UNREACHABLE message communicated from a Mobility Management Entity, MME (e.g., to a Visitor location register, VLR), a Radio Link Control, RLC, message communicated from a Visitor location register, VLR, (e.g., to a mobile switching centre, MSC) and/or a SIP 480 User Not Available message communicated from a mobile switching centre, MSC.

The SGsAP-UE-UNREACHABLE message may be translated into a SIP 480 User Not Available message (e.g., by the VLR/MSC).

The unique mobile identity may be a Public User Identity, PUI, an International Mobile Subscriber Identity, IMSI, and/or a Mobile Station International Subscriber Directory Number, MSISDN.

The primary identity may be a Mobile Station International Subscriber Directory Number, MSISDN.

The mobile device may comprise a subscriber identity module, SIM, or an embedded SIM, eSIM.

One or more of the following steps may be performed by a mobility management entity, MME:
receiving the register message from a mobile device;
storing, in a subscriber data store, a record comprising the mobile identity of the mobile device and an indication that the mobile device is unable to accept voice calls;
receiving the message during initiation of a voice call to the destination mobile device;
retrieving, from a subscriber data store, a record comprising the mobile identity of the mobile device; and
responding to the message by sending a reply comprising an indication that the destination mobile device is unreachable.

The MME may receive an Initial Address Message, IAM, during initiation of a voice call to the destination mobile device.

A network entity configured to perform any of the methods described above is also provided.

A computer program comprising instructions that, when executed on a processor, cause the processor to perform any of the methods described above is also provided.

### Brief description of the drawings

The invention is described with reference to the following drawings, which illustrate non-limiting examples of the invention.
Fig. 1 illustrates a message flow diagram of a method of mobile device registration according to a specific example.
Fig. 2 illustrates a message flow diagram of a method of initiating a voice call according to a specific example.
Fig. 3 illustrates a flowchart of an example method.
Fig. 4 illustrates a flowchart of an example method.

### Detailed Description

As described above, a multi-device service permits a subscriber to register multiple different devices that use the same primary identity. Outgoing calls from any of the devices will appear to originate from the same primary identity. Incoming calls will cause all registered devices to ring simultaneously. The call may be answered on any of the devices.

Each device registers with the core network to authenticate, obtain credentials and initiate service. A multi-device subscriber has multiple mobile device subscriptions within a single IRS. This ensures the same end-user experience for each mobile device subscription. All unique public user identities of the user (also called PUIs or IMPIs) are in the same IRS subscription. Each IRS has one default common primary identity (also referred to as an IMPU).

Each of the mobile devices belonging to the set may have a, PUI. Each of the plurality of mobile devices belonging to the set may share a common primary identity. The primary identity may be a Mobile Station International Subscriber Director Number, MSISDN.

An issue has been observed when implementing multi-device capability for devices that are recognised as "data only" devices in the mobile operator's network. Multi-device capability facilitates multi-ringing, which means that an incoming call is forked to the primary device and secondary device(s), and both/all ring simultaneously.

Where the secondary device is a smart watch, multi-ring generally functions correctly. This is because the watch is voice capable and therefore is not recognised as a data-only device.

However, when implementing multi-ring for computer tablets that are recognised as data-only devices (and are not capable of receiving circuit-switched voice calls), an issue is observed.

The computer tablet is recognised as a data-only device on the 4G network. Therefore, the MME sends back a "busy" response to the network when receiving an incoming call. As a consequence to the "busy" response, all incoming calls are dropped. This includes calls on the primary devise and all of the secondary devices. Therefore, this behaviour prevents calls from ringing on the users devices whenever a data-only device is registered in the IRS.

In 2G and 3G, a computer tablet may be treated as a data and voice device, as the network cannot distinguish between voice-capable device and data-only devices in these RATs.

In 4G (LTE), a computer tablet may be identified as a data-only device, using additional functionality added to 4G compared to 2G/3G.

In 4G (LTE), a data-only device may attach as 'data-centric' device by setting the 'Additional Update Type' value (AUTV) information element to "1" (SMS only).

The Preferred CloT network behaviour (PNB-CloT) information element may be set to "0".

The "Signalling active" flag (SAF) may be set to "1".

When the mobile device has registered with these settings, an incoming voice call gets rejected by the MME with a SGsAP-PAGING-REJECT message, because of the SMS only setting (as per 3GPP TS 29.118, section 5.1.3.1, which is herein incorporated by reference).

The proposed solution involves:
- The end mobile device (e.g., user equipment) sends the appropriate information to the MME (e.g., during the attach process).
- The MME stores the appropriate information in an accessible subscriber data store (e.g., a database).
- The MME uses the information to decide if and how to contact the user.

Existing standards already mandate that the mobile device sends the appropriate information to the MME. However, the policy should be enforced consistently across devices. A device that is not voice-capable can register itself in the network on LTE using the UEUsageSetting and VoiceDomainPreferenceForEUTRAN information elements. For example, the mobile device may set UEUsageSetting = 1 (Data-Centric) and/or VoiceDomainPreferenceForEUTRAN = 2 (imsPSVoiceOnly).

During the LTE attach process, this information received from the mobile device may be registered in a subscriber data store to be checked later (when an incoming call to the device is initiated).

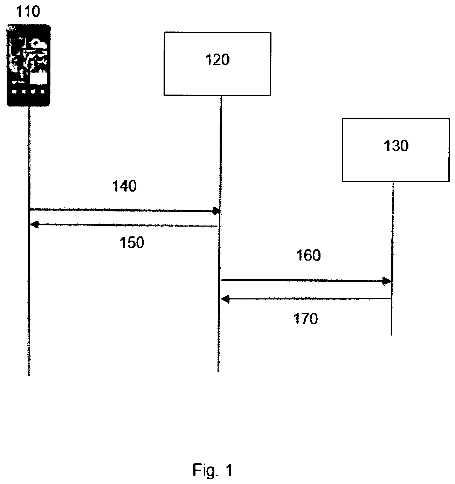

Fig. 1 illustrates how the MME stores information received from the mobile device during the attach process.

At step 140, the LTE attach process is initiated. The IMSI and/or MSISDN of the mobile device 110 is communicated to the MME 120. One or more of the following information elements are also communicated to the MME 120:
UEUsageSetting = 1; and
VoiceDomainPreference ForEUTRAN = 2.

At step 150, an OK message is sent from the MME 120 to the mobile device 110.

At step 160, the information relating to the mobile device 110 is inserted into a subscriber data store 130. The information may be saved in the data store as a record comprising a unique identifier of the mobile device (e.g., IMSI and/or MSISDN). The record may also comprise an indication that the mobile device is unable to accept voice calls. Accordingly, the record may comprise one or more of:
UEUsageSetting = 1; and
VoiceDomainPreference ForEUTRAN = 2.

The subscriber data store may be a part of the UDR/HLR/HSS.

At step 170, an OK message is sent from the subscriber data store 130 to the MME 120.

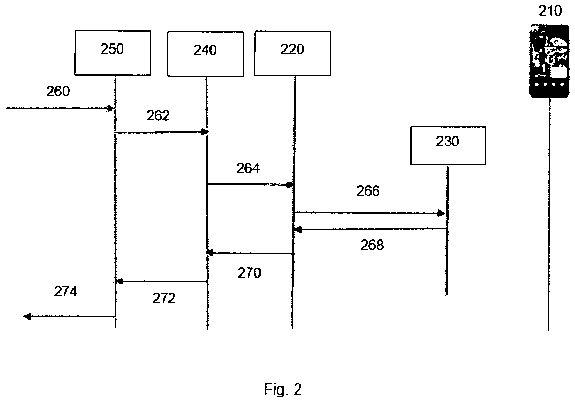

Fig. 2 illustrates how the MME uses the stored information to decide if and how to contact the mobile device.

At step 260, a SIP INVITE is received by the MSC 250 (also referred to as MSS). The SIP INVITE may be received from an Application Server managing the user's IRS. Note that the forking of the call to all devices in the multi-device set is not illustrated in Fig. 2 and occurs prior to step 260.

At step 262, an IAM is sent from the MSC 250 to the VLR 240.

At step 264, a Paging request is sent from the VLR 240 to the MME 220. At step 266, the MME 220 checks the usage setting and voice domain of the mobile device 210 by requesting a record relating to the mobile device 210 from the subscriber data store 230.

At step 268, the record is returned from the subscriber data store 230 to the MME 220, where the record indicates that the mobile device 210 is unable to accept voice calls (i.e., the mobile device 210 is a data-centric device).

At step 270, a SGsAP-UE-UNREACHABLE message is sent from the MME 220 to the VLR 240. The SGsAP-UE-UNREACHABLE message in step 270 may also comprise a new parameter, to indicate that the device is unreachable because it is a data-only device.

At step 272, a RLC message is sent from the VLR 240 to the MSC 250.

At step 274, the MSC responds to the SIP INVITE with a SIP 480 message (indicating that the device is unreachable/unavailable, rather than busy).

The SIP 480 message may be sent to the Application Server handling the user's IRS. The Application Server may inspect the response (termination code) and, in response to the SIP 480 message, may cancel the call to the mobile device but continue the calls to the other mobile devices in the IRS. This is in contrast to prior art methods, in which the response would be converted by the MSC to a SIP 486 BUSY message. A SIP 486 message sent to the Application Server would cancel the call to all devices in the IRS in response to the 486 message (in other words, would cause every device in the IRS to stop ringing).

In IMS there is no indication of whether the user is capable of circuit-switched voice or not. Therefore, the SIP INVITE will be broken out to the circuit-switched (CS) domain regardless. The MSC will start the procedure to search the user in the CS domain, issuing a IAM (Initial Address Message) to the VLR, which will subsequently start the paging request to the MME to locate the user.

Instead of blindly issuing the paging request to the Node B, the MME according to the proposed methods may check if the mobile device (e.g., UE) associated with the unique identifier (e.g., MSISDN and/or IMSI) is known by the MME as a data-only device.

The handling of the paging request depends on the state of the SGs association, the EMM context variables at the MME, and the Service indicator information element in the SGsAP-PAGING-REQUEST message.

If the mobile device is known and a voice domain preference parameter indicates that the mobile device is a Data-centric terminal (e.g., VoiceDomainPreferenceForEUTRAN and/or UEUsageSettings information element) and/or the mobile device is an SMS only terminal (e.g., using the Additional Update Type value information element), then the MME may return a SGsAP-UE-UNREACHABLE message, instead of a SGsAP-PAGING-REJECT message. As a result, the VLR may continue to send Paging requests to other devices in the IRS. Advantageously, the proposed solution is not reliant on timers or manual network configuration.

Likewise, if the mobile device is known and is a Data-centric terminal with no voice domain preference indication, and the mobile device is an SMS only device, then the MME may return SGsAP-UE-UNREACHABLE, instead of SGsAP-PAGING-REJECT.

Ultimately, the SGsAP-UE-UNREACHABLE message may be translated into a 480 User Not Available response to the original INVITE, rather than a 486 BUSY response.

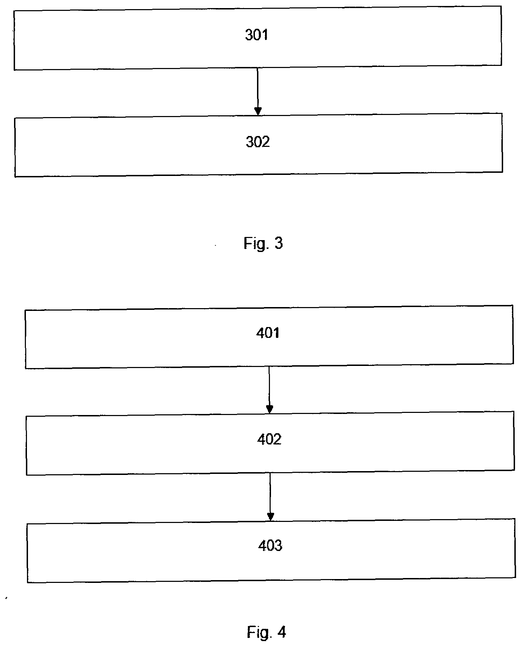

Fig. 3 illustrates a flowchart of an example method of registering a mobile device. The method comprises:
at step 301: receiving a registration message from a mobile device, wherein the mobile device corresponds with a unique mobile identity, wherein the mobile identity is one of a plurality of mobile identities belonging to a set, wherein the plurality of mobile identities belonging to the set share a common primary identity, wherein the registration message comprises an indication that the mobile device is unable to accept voice calls; and
at step 302: storing, in a subscriber data store, a record corresponding to the unique mobile identity of the mobile device and an indication that the mobile device is unable to accept voice calls.

Fig. 4 illustrates a flowchart of an example method of initiating a voice call. The method comprises:
at step 401: receiving a message during initiation of a voice call to a destination mobile device, wherein the destination mobile device corresponds with a unique mobile identity, wherein the mobile identity is one of a plurality of mobile identities belonging to a set, wherein the plurality of mobile identities belonging to the set share a common primary identity;
at step 402: retrieving, from a subscriber data store, a record corresponding to the unique mobile identity of the mobile device, wherein the record further comprises an indication that the mobile device is unable to accept voice calls;
at step 403: responding to the message during initiation of a voice call by indicating that the destination mobile device is unreachable.

Any of the methods described herein may be implemented as a computer program. The computer program may be configured to control a network entity and/or mobile device to perform any method according to the disclosure. A network entity of a telecommunications network (e.g., a cellular network) may also be provided, configured to operate in accordance with certain methods disclosed herein. For example, the network entity may include a processor and at least one communication interface, particularly comprising one or both of a transmitter and receiver. A mobile device (e.g., UE) may also be provided, configured to operate in accordance with certain methods disclosed herein. The mobile device may likewise include a processor and at least one communication interface, particularly comprising one or both of a transmitter and receiver.

Although specific embodiments have now been described, the skilled person will understand that various modifications and variations are possible. For example, whilst the disclosure is described in relation to existing network architecture, it will be understood that changes to the architecture (and/or nomenclature) are possible, but the present disclosure may still be applicable in this case. Also, combinations of any specific features shown with reference to one embodiment or with reference to multiple embodiments are also provided, even if that combination has not been explicitly detailed herein.

Where this application refers to a server or network entity, for instance, this may actually be a pair of servers, or network entities (primary and failover), for redundancy.

Examples of mobile devices include various devices that transmit and receive user data and/or various kinds of control information to and from a base station. The mobile device may be referred to as a user equipment (UE), terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above methods are described in relation to a specific networks in some examples, (such as a 4G/LTE or 5G/NR network), these methods, techniques, apparatuses, and systems may be applied to a variety of wireless multiple access systems. Examples of the multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Examples may be implemented by computer software or a "computer program." A storage medium and a transmission medium carrying the computer software are also provided. The computer software may comprise one or more instructions, or code, that, when executed by a computer, causes the methods described to be performed. Computer software may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EEPROM, EPROM, Flash memory or a portable/removable memory device), etc. The transmission medium may be a communications signal, a data broadcast, a communications link between two or more computers, etc.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a mobile device, a network entity, a step, a parameter, or a message) means "one or more" (for instance one or more mobile devices, one or more network entities, one or more steps, one or more parameters, or one or more messages). Throughout the description and claims of this disclosure, the words "comprise", "including", "having" and "contain" and variations of the words, for example "comprising" and "comprises" or similar, mean "including", and are not intended to (and do not) exclude other components.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. As described herein, there may be particular combinations of aspects that are of further benefit, such the aspects of determining a set of compensation parameters and applying a set of compensation parameters to measurements. In particular, the preferred features of the invention are applicable to all aspects of the invention and may be used in any combination. Likewise, features described in non-essential combinations may be used separately (not in combination).

A method of manufacturing and/or operating any of the devices disclosed herein is also provided. The method may comprise steps of providing each of the features disclosed and/or configuring or using the respective feature for its stated function.

## Claims

1. A method of registering a mobile device, the method comprising:
receiving a registration message from a mobile device, wherein the mobile device corresponds with a unique mobile identity, wherein the mobile identity is one of a plurality of mobile identities belonging to a set, wherein the plurality of mobile identities belonging to the set share a common primary identity, wherein the registration message comprises an indication that the mobile device is unable to accept voice calls; and
storing, in a subscriber data store, a record corresponding to the unique mobile identity of the mobile device and an indication that the mobile device is unable to accept voice calls.

2. The method of claim 1 wherein the registration message is generated as part of an attach sequence.

3. The method of any preceding claim, wherein the indication in the registration message that the mobile device is unable to accept voice calls comprises one or more of:
a usage setting parameter; and
a voice domain parameter.

4. A method of initiating a voice call, the method comprising:
receiving a message during initiation of a voice call to a destination mobile device, wherein the destination mobile device corresponds with a unique mobile identity, wherein the mobile identity is one of a plurality of mobile identities belonging to a set, wherein the plurality of mobile identities belonging to the set share a common primary identity;
retrieving, from a subscriber data store, a record corresponding to the unique mobile identity of the mobile device, wherein the record further comprises an indication that the mobile device is unable to accept voice calls;
responding to the message during initiation of a voice call by indicating that the destination mobile device is unreachable.

5. The method of claim 4, wherein the message during initiation of a voice call is a SIP invite, Initial Address Message, IAM, and/or Paging request.

6. The method of claim 4 or claim 5, wherein the indication that the destination mobile device is unreachable is an indication that the destination SIP device is temporarily unreachable.

7. The method of any of claims 4 to 6, wherein the indication that the destination mobile device is unreachable comprises an SGsAP-UE-UNREACHABLE message communicated from a Mobility Management Entity, MME, a Radio Link Control, RLC, message communicated from a Visitor location register, VLR, and/or a SIP 480 User Not Available message communicated from a mobile switching centre, MSC.

8. The method of any preceding claim, wherein the unique mobile identity is a Public User Identity, PUI, an International Mobile Subscriber Identity, IMSI, or a Mobile Station International Subscriber Directory Number, MSISDN.

9. The method of any preceding claim, wherein the mobile device comprises a subscriber identity module, SIM, or an embedded SIM, eSIM.

10. The method of any preceding claim, wherein one or more of the following steps are performed by a mobility management entity, MME:
receiving the registration message from a mobile device;
storing, in a subscriber data store, a record comprising the mobile identity of the mobile device and an indication that the mobile device is unable to accept voice calls;
receiving the message during initiation of a voice call to the destination mobile device;
retrieving, from a subscriber data store, a record comprising the mobile identity of the mobile device; and
responding to the message by sending a reply comprising an indication that the destination mobile device is unreachable.

11. A network entity configured to perform the method of any preceding claim.

12. A computer program comprising instructions that, when executed on a processor, cause the processor to perform the method of any of claims 1 to 10.
